Europäisches Patentamt

European Patent Office

Office européen des brevets

(11) Publication number: **0 251 255**
A2

## (12) EUROPEAN PATENT APPLICATION

(21) Application number: 87109250.8

(22) Date of filing: 26.06.87

(51) Int. Cl.⁴: **B62D 55/253** , B62D 55/20 , B62D 55/28

(30) Priority: 27.06.86 ZA 864795

(43) Date of publication of application:
07.01.88 Bulletin 88/01

(84) Designated Contracting States:
AT BE CH DE ES FR GB GR IT LI LU NL SE

(71) Applicant: **Barnard, Jan Hendrik**
**Section 90 of Section 77**
**Wildebeesthoek 310 JR District Pretoria**
**Transvaal Province(ZA)**

(72) Inventor: **Barnard, Jan Hendrik**
**Section 90 of Section 77**
**Wildebeesthoek 310 JR District Pretoria**
**Transvaal Province(ZA)**

(74) Representative: **Patentanwälte Leinweber &**
**Zimmermann**
**Rosental 7/II Aufg.**
**D-8000 München 2(DE)**

(54) Endless-track belt for vehicle traction.

(57) An endless track vehicle 10 is provided with two
laterally spaced endless articulated track members
12 for running around longitudinally spaced drive
wheels 14 and deflecting wheels 16 of the vehicle
10. Each track member includes a series of transverse track elements 40 held together bead fashion
under tension in abutting relationship by at least one
but preferably a plurality of transversely spaced end-
less tensile core elements 42 which are of laminated
flat metal strip loops fitting snugly inside one an-
other. The tensile core elements 42 are of rectangu-
lar cross section. Adjacent track elements 40 abut
along transverse articulating hinging zones 54 along
which the track elements 40 can hinge relative to
each other as they articulate during use.

## Vehicle Traction

### FIELD OF INVENTION

THIS INVENTION relates to vehicle traction. It relates in particular to an endless track member which includes a plurality of transverse track elements held together bead fashion by at least one tensile core element.

It is an object of this invention to provide endless track members and whose tensile core elements are less expensive than those used previously.

### SUMMARY OF THE INVENTION

Accordingly the invention provides an endless articulated track member for running around longitudinally spaced drive and deflecting wheels of an endless track vehicle, and which includes a series of transverse track elements held together bead-fashion under tension in abutting relationship by at least one endless tensile core element, the endless tensile core element being of laminated flat metal strip loops fitting snugly inside one another.

The tensile core element may be substantially of rectangular cross section.

Adjacent track elements may abut along transverse articulating hinging zones along which the track elements can hinge relative to each other as they articulate during use. The tensile core element may have its inner surface aligned radially with or radially outside the hinging zones of the transverse track elements so as to permit stress variations in but to avoid stress reversals in the tensile core element as the transverse track elements articulate during use.

The transverse track elements have aligned passages to accommodate the tensile core element. The radial depth of the passages may be greater than the thickness of the tensile core element, so as to leave small flexibly adjustable initial clearance spaces in use between the outer surface of the tensile core element and the radially outer surfaces of the said passages. A track member may have a plurality of tensile core elements of equal length spaced transversely across the width of the track member.

The passages in the transverse track elements may be defined by inner and outer members which may be of resilient material and which may be clamped together by bolts passing transversely between the transversely spaced tensile core elements. The inner and outer members may abut along a face aligned with the inner surfaces of the tensile core elements. The tensile core elements may be placed under tension by the longitudinal expansion Poisson fashion of the inner and outer members when clamped transversely together to cause adjacent transverse track elements to abut against each other under pressure. The initial radial clearance spaces between the outer surfaces of the tensile core elements and the said outer surfaces of the passages are also then taken up.

The transverse track elements may be made up of inner and outer parts which are disposed radially inwardly and radially outwardly respectively of the tensile core element(s). The said inner and outer parts provide seats for the resilient inner and outer members and abut along longitudinal faces in the region of the hinging zones.

This invention extends also to a tensile core element adapted to form part of a track member as described in which the plurality of laminated flat metal strip loops fitting snugly inside one another are formed by welding the ends of flat metal strips together, and in which the welds are spaced circumferentially.

The weld of a loop may extend diagonally across the width of the flat metal strip forming the loop. The length of the diagonal weld may lie in the range of two to four times the width of the metal strip.

The flat metal strip loops may be anything from one to thirty in number and may have a metal strip thickness of half a millimeter or more, but 1 mm at the most. The number of loops used and the thickness of strip will depend upon the diameter of the drive and deflecting wheels and upon the size of the vehicle. A dry lubricant may be provided between successive laminated flat metal strip loops to inhibit fretting corrosion between successive loops. The lubricant may include molybdenum disulphide, and may be 8 microns thick at the most. The lubricant may be in the form of a coat 4 microns thick on both surfaces of each of the flat metal strip loops. Such a coat of dry chemically deposited lubricant may itself be protected by a thin coat of polyurethane, say, 2 microns thick.

The tensile core element may have a width which is from four to six times its thickness. An outer flat metal strip loop may be $2\pi$ times the thickness of the metal strip longer than an adjacent inner flat metal strip loop. The flat metal strip for making the flat metal strip loops may be of mild steel work hardened during rolling and may have been work hardened by being stressed in tension to slightly beyond the elastic limit, to an extent, say, 5% to 15%.

The invention extends further to a track element shaped and dimensioned to form part of a track member as herein described.

The invention will now be described by way of example with reference to the accompanying diagrammatic drawings.

## BRIEF DESCRIPTION OF THE DRAWINGS

In the drawings,

FIGURE 1 shows a side view of a vehicle when lightly loaded, and incorporating a pair of endless articulated track members in accordance with the invention, and mounted on pneumatic drive and guide or tensioning or deflecting wheels;

FIGURE 2 shows a plan view of the lower part of the vehicle shown in Figure 1;

FIGURE 3 shows a part front elevation at III-III in Figure 1, but to a larger scale of a track element forming part of a track member in accordance with the invention;

FIGURE 4 shows a cross-section at IV-IV in Figure 3, through a track element;

FIGURE 5 shows a part cross-section similar to Figure 4, but to a larger scale;

FIGURE 6 shows a side elevation of a tensile core element of laminated flat metal strip loops in accordance with the invention;

FIGURE 7 shows a part detail plan view of the butt-weld of a flat metal strip loop;

FIGURE 8 shows a cross-section at VIII-VIII in Figure 6; and

FIGURE 9 shows a stress elongation diagram for stretching a flat metal strip loop for a tensile core element, or for stretching a tensile core element.

## DETAILED DESCRIPTION

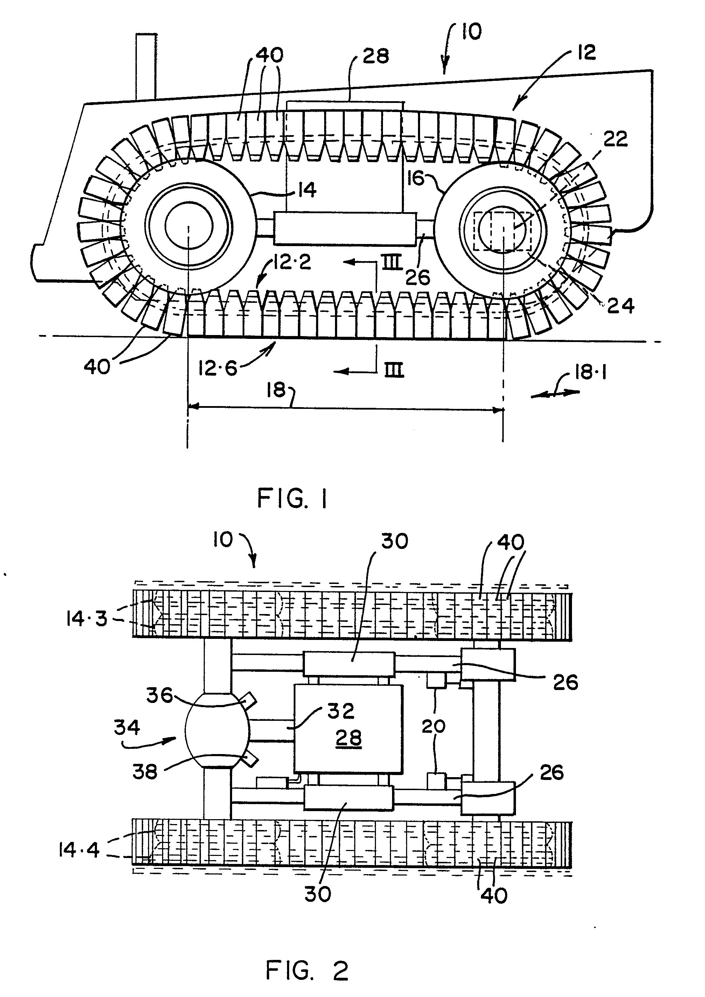

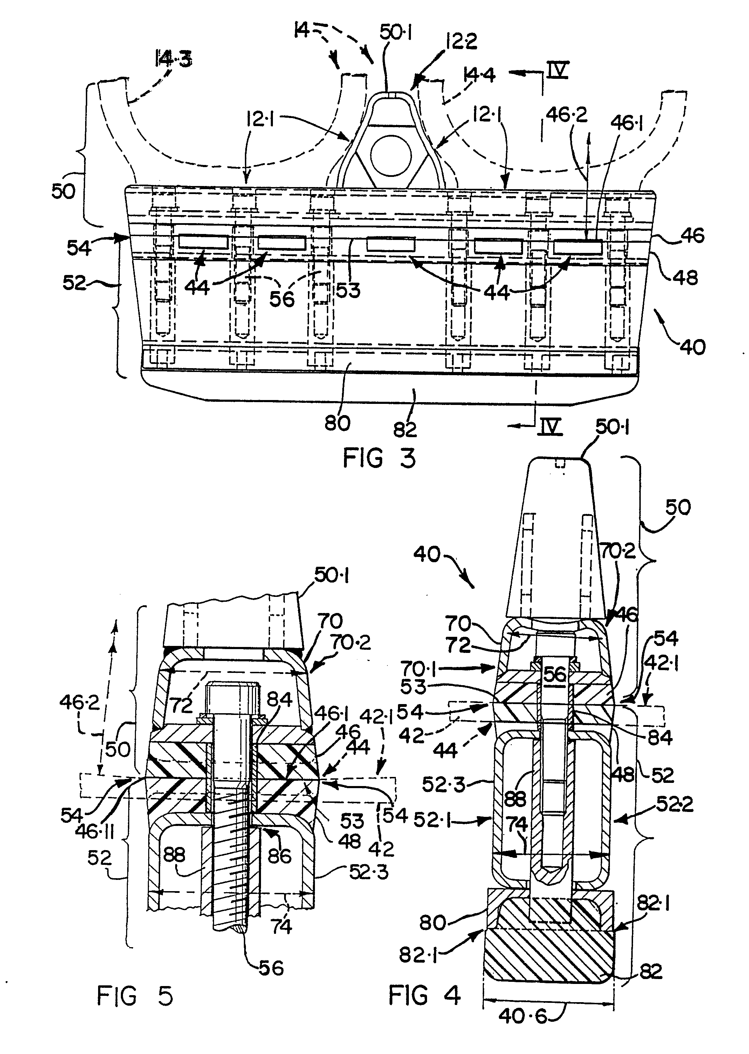

Referring to Figures 1 and 2 of the drawings, reference numeral 10 refers generally to a vehicle having two transversely spaced endless articulated track members 12 in accordance with the invention. The track members 12 are mounted on pneumatic drive wheels 14 and on pneumatic deflecting or tensioning or guide wheels 16. The track members 12 have transversely spaced friction faces 12.1 (see Figure 3) adapted to co-operate and engage frictionally with the outer surfaces of the wheels 14 and 16 respectively. The track members 12 have central locating ridges 12.2 which in use seat snugly in grooves or passages in the outer peripheries of wheels 14 and 16, or between double wheels 14.3 and 14.4. Where single wheels are used, outer locating ridges (not shown) may be provided for bearing against the sides of the wheel at its periphery. The pneumatic wheels 14 and 16 may be the same as those used on heavy vehicles.

The length of the wheel base 18, between the drive wheels 14 and deflecting wheels 16, is adjustable in the direction of arrow 18.1 by means of adjusting means 20 (see Figure 2). The deflecting wheels 16 have cross-heads 22, slidable along slide faces 21 provided at the end of transversely spaced longitudinal members 26 extending between drive wheels 14 and deflecting wheels 16.

The vehicle 10 has a prime mover in the form of an engine 28, which may be rigidly mounted on the transmission or mounted on slides 30, slidable along the longitudinal members 26. This permits the longitudinal position of the engine 28 to be adjusted relative to the rotational axes of the drive and deflecting wheels 14 and 16. This also permits adjustment of the position of the centre of mass of the vehicle without the addition of extra mass. A telescopically extensible and retractable propeller shaft 32 is provided between the engine 28 and the differential system 34 of the drive wheels 14. Separate motors 36 and 38 are provided for braking one or other of the drive wheels 14, or causing them to rotate at different speeds in the same direction of rotation, or even in opposite directions. This is for manoeuvering purposes.

The endless articulated track member 12 will now be described in greater detail. It includes a series of transverse track elements 40 held together bead-fashion in abutting relationship by a plurality of endless tensile core elements 42 under tension, spaced in series across the width of the track member 12. The tensile core elements 42 seat in passages 44 defined between resilient inner and outer members 46 and 48 forming part of the track elements 40. A track element 40 includes a transverse bar which is preferably made of steel sections which are welded together to form inner and outer parts 50 and 52 respectively, which are disposed radially inwardly and outwardly respectively of the tensile core elements 42. The parts 50 and 52 and resilient inner and outer members 46 and 48 are bolted together by bolts 56 between the tensile core elements 42 which are in the form of laminated flat metal strip loops. The inward projections 50.1 forming part of the inner parts 50 together make up the locating ridges 12.2 of the track members 12. Adjacent track elements 40 abut along transverse articulating hinging zones 54 along which the track elements 40 can hinge relative to each other as they articulate during use.

The tensile core elements 42 are made of mild steel strips formed into loops 60. The loops are formed by welded joints 60.1 extending diagonally across the width 60.2 of the strips. The welding is by electron beam or laser beam to ensure that the joints 60.1 are not thicker than the strips. The length 60.3 of a joint 60.1 is about three times the width 60.2 of the strip. The strips are ½ mm thick and 46 mm wide. Twenty loops are laminated together to form a tensile core element 42. The tensile core element 42 therefore has a width 60.2 which is more than five times its thickness 60.4. The several welded joints 60.1 of the loops 60 are staggered circumferentially around a tensile core element 42.

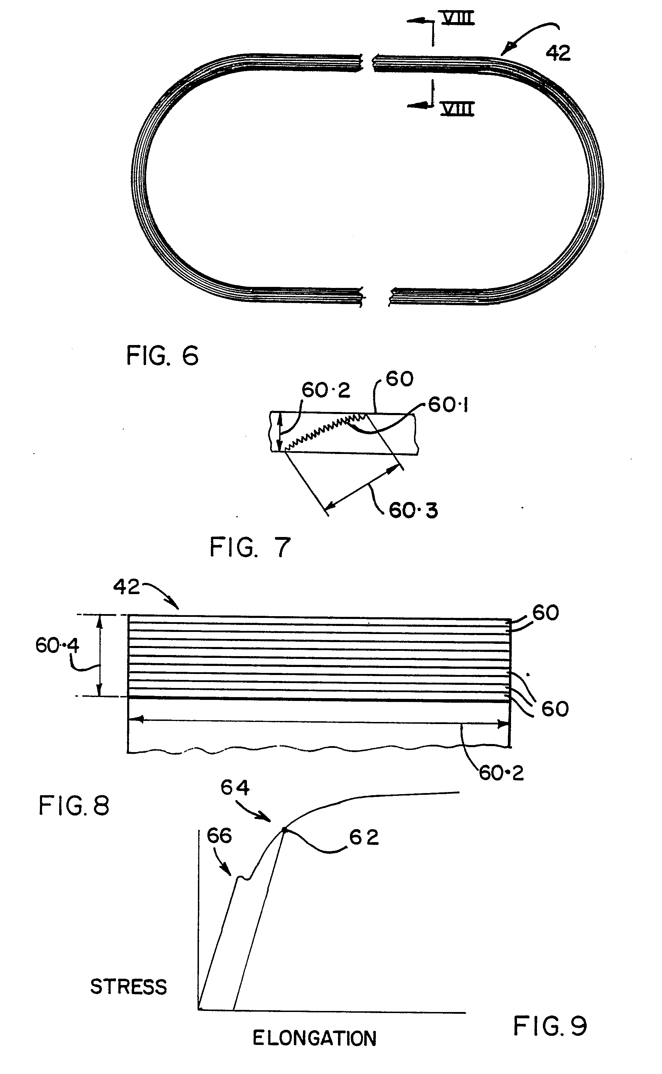

Successive loops of a tensile core element 42 are made slightly longer than adjacent inner loops by an amount corresponding to $2\pi$ times the thickness of the flat metal strip, plus any clearance which may be desired for a lubricant coat. A dry lubricant coat containing molydenum disulphide is provided between successive loops 60 to inhibit fretting corrosion. The lubricant coat of about 4 microns thickness is deposited chemically onto the outer and inner surfaces of the loops. Thereafter, the outer surfaces of the loops are provided with a polyurethane coat sprayed to a thickness of about 2 microns. Where necessary, loops are stretched slightly to get them to the required lengths to fit snugly inside one another. Such stretching takes place by the loops running belt fashion on a pair of rotatable wheels whose centre distance can be varied and whose radii correspond to the inner surface radii of the tensile core elements 42 when the track members 12 pass around the drive and deflecting wheels 14 and 16 during use. Where there are slight variations in length of the loops 60 of a tensile core element 42, then the tensile core element 42 may be stretched as a whole to the correct length. Stretching must, however, not take place to an extent beyond point 62 on the stress elongation diagram shown in Figure 9.

In order to ensure accuracy in the lengths of the loops 60 and hence in the lengths of the tensile core elements 42, the flat metal strips are cut to the required lengths under controlled temperature conditions, and then welded in an aligning jig. The subsequent assembly of the loops 60 to form the tensile core elements 42 can then take place with minimum stretching operations on the loops 60 or on the finished tensile core elements 42. If necessary, loops 60 singly or together may be work-hardened by placing them under tension to the point 62 on the stress elongation diagram 64 in Figure 9. Such stressing beyond the yield point 66 to the point 62 causes the loop to be work-hardened.

Referring particularly to Figures 3, 4 and 5 of the drawings, there is shown a track element 40 made up of the inner part 50 onto which is bolted an outer part 52 by means of transversely spaced radial bolts 56. The inner part 50 has a part 70 of substantially channel section having taper sides 70.1 and 70.2 which converge inwardly and define an included angle 72 of between five and eight degrees. The outer parts 52 have pressure faces 52.1 and 52.2 which also converge inwardly, but the taper is less, having an included angle 74 of between one-quarter degree to one-third degree. The tensile core elements 42 are accommodated with clearance in passages 44 defined between resilient inner and outer members 46 and 48 forming respectively part of the inner and outer parts 50 and 52. The inner and outer parts 50 and 52 and resilient seat members 46 and 48 are securely held together by means of bolts or set screws 56. The said inner and outer members 46 and 18 taper outwardly and have their greatest width at and abut along the face 53. In use they are under sufficient compression to bulge Poisson-fashion axially relative to the tensile core elements 42 to place them under tension. The bolts or screws 56 are disposed transversely to the longitudinal abutting face 53 which in practice aligns with or is in close proximity to the hinging zone 54.

The inner and outer members 46 and 48 form part of the inner part 50 and the outer part 52 respectively. The curved inner periphery 46.1 of the inner member 46 has a radius of curvature 46.2 having its centre, in use, on the rotational axes (not shown) of the wheels 14 and 16 as the track member 12 passes around them. The curved inner periphery 46.1 of the inner member 46 blends via small radii 46.11 with the end faces of the inner member 46.

The inner and outer members 46 and 48 are of resilient material, such as polyurethane or rubber having a Shore hardness of 85 to 95.

The outer part 52, includes a channel member 80. A transverse soil surface-engaging element in the form of a resilient pad 82 of rubber is bonded to the inner surface of the channel 80. The pad 82 projects slightly at 82.1 on either side of the flanges of the channel 80.

The track member 12 is so made that the contact portion on the ground under full load can be regarded as practically a solid beam having some resilience and possibility of deflection. Limited hinge movement and pre-load result in an articulated oval wheel having a deflecting wheel 16 in front and a driving wheel 14 at the back. Under light loading, that part of the endless track of the bottom span 12.6 which contacts the ground, is slightly curved, having a radius of curvature of several metres. Under maximum loading and driving force, it becomes a solid straight beam. It is not contemplated that any additional carrying wheels between the drive wheels 14 the deflecting wheels 16 will be needed. The thickness 40.6 of the pads 82, at the outer periphery of the track element 40 remote from the tensile core elements 42, is slightly more, say, ½ mm to 1 mm more, than the corresponding width of the channel 80. Adjacent pads 82 will then seal off in use even before they come into contact with the ground, to ensure that particles of soil do not enter between them.

The oval wheel can provide an arcuate contact surface with the ground, which is substantially greater than that which is obtainable with ordinary round pneumatic tyres. Indeed, the contact area of the oval wheel can be equivalent to a round wheel of several metres diameter.

In assembly, the inner and outer parts 50 and 52 are clamped over the tensile core elements 42, and the bolts 56 are tightened. Thereby the initial clearances between the tensile core elements 42 and the outer surfaces of the passages 44 are taken up and the tensile core elements 42 are under radial compression. The extent to which the bolts 56 are tightened determines the extent of tensile and radial compressive preload on the tensile core elements 42. Thus, some adjustment in the degree of flexibility and resilience of the track member is obtained. The degree to which the inner and outer members 46 and 48 can be compressed is limited by the length of bushes 84 provided around each of the bolts 56. The length of the bushes 84 is so chosen that the degree of compression of the inner and outer members 46 and 48 does not go beyond the elastic limit of the material. In other words, the degree of compression does not result in a permanent set in the inner and outer members 46 and 48.

There is slight clearance at 86 between the ends of the socket members 88 and the box portion 52.3. The socket members 88 are fast with the channel member 80. The slight clearance 86 permits the channel member 80 being pulled up by the bolts 56 to seat firmly against the box portion 52.3 by taking up the clearance 86, and thereby controlling the pressure on the tensile core elements 42.

In use, track members 12, made up of transverse track elements 40, can have adjustable flexibility because of the resilient inner and outer members 46 and 48, and the bolts 56.

A method of making a track member 12 as described, to have a desired pre-tension of the tensile core elements 12, includes tightening the bolts or set screws 56 holding together the outer and inner parts 50 and 52 of the track elements 40, to cause longitudinal expansion Poisson-fashion of the said resilient inner and outer members 46 and 48. The location of the tensile core elements 42 radially outside the hinging zones 54 ensures that stress reversals do not take place in the tensile core elements during operation. In order to avoid fatigue failure, the tensile component of bending stress in the tensile core elements 42 superimposed on the tensile stress due to such pre-tension in the tensile core elements must not exceed the cyclic stress sensitivity limit for the laminated flat metal strip material of the loops 60 of the tensile core elements 42.

Flexibility of the track member permits a limited degree of conformable deflection, thereby permitting track members 12 to pass over protrusions or uneven terrain without exerting undue pressure on such protrusions.

**Claims**

1. An endless articulated track member (12) for running around longitudinally spaced drive wheels (14) and deflecting wheels (16) of an endless track vehicle (10), and which includes a series of transverse track elements (40) held together bead-fashion under tension in abutting relationship by at least one endless tensile core element (42), characterized thereby that the endless tensile core element (42) includes a plurality of laminated flat metal strip loops (60) fitting snugly inside one another.

2. A track member as claimed in Claim 1 in which the tensile core element (42) is substantially of rectangular cross section.

3. A track member as claimed in Claim 1 or Claim 2, in which adjacent track elements (40) abut along transverse articulating hinging zones (54) along which the track elements (40) can hinge relative to each other as they articulate during use.

4. A track member as claimed in Claim 2, in which the tensile core element (42) has its inner surface (42.1) aligned radially with or radially outside the hinging zones (54) of the transverse track elements (40) so as to permit stress variations in but to avoid stress reversals in the tensile core element (42) as the transverse track elements (40) articulate during use.

5. A track member as claimed in any one of the preceding claims, in which the transverse track elements (40) each include resilient inner members (46) and outer members (48) which together define aligned passages (44) to accommodate the tensile core element (42) initially with radial clearance.

6. A track member as claimed in Claim 5, in which the clearance is provided by the radial depth of the passages (44) being initially greater than the thickness of the tensile core element (42), so as to leave radial clearance spaces in assembly between the outer surface of the tensile core element and the radially outer surfaces of the said passages, and in which clamp means (56) are provided on either side of the tensile core element (42) to compress the resilient inner and outer members (46, 48) to take up the said initial radial clearance.

7. A tensile core element adapted to form part of a track member as claimed in any one of the preceding claims, and which includes a plurality of laminated flat metal strip loops (60) fitting snugly inside one another, the said loops (60) being formed by welding the ends of flat metal strips together; the welds being spaced circumferentially around the tensile core element (42).

8. A tensile core element as claimed in Claim 7 in which the weld (60.1) of a loop (60) extends diagonally across the width (60.2) of the flat metal strip forming the loop (60), the length (60.3) of the diagonal weld (60.1) lying in the range of two to four times the width (60.2) of the metal strip.

9. A tensile core element as claimed in Claim 7 or Claim 8 having a width (60.2) which is from four to six times its thickness (60.4), and in which the said loops (60) have a metal strip thickness of 1 mm at the most.

10. A tensile core element as claimed in any one of the Claims 7 to 9 inclusive, in which a dry lubricant coat is provided on each laminated flat metal strip loop (60).

11. A transverse track element 40 shaped and dimensioned and adapted to form part of a track member 12 as claimed in any one of Claims 1 to 6 inclusive.

FIG. 1

FIG. 2

FIG 3

FIG 5

FIG 4

FIG. 6

FIG. 7

FIG. 8

FIG. 9

STRESS

ELONGATION